# EUROPÄISCHE PATENTSCHRIFT

(11) **EP 0 593 883 B1**
(45) Veröffentlichungstag und Bekanntmachung des Hinweises auf die Patenterteilung: **06.12.1995**
(21) Anmeldenummer: 93113811.9
(22) Anmeldetag: 30.08.1993
(51) Int. Cl.: C03C 17/36

(54) **Verfahren zur Herstellung von Fensterscheiben mit hoher Strahlungstransmission im sichtbaren Spektralbereich und hoher Strahlungsreflexion im Wärmestrahlungsbereich**
Process for the preparation of window panels with high radiation transmission in the visible wavelength range and high radiation reflectance for heat rays
Procédé de préparation de panneaux de fenêtre avec une grande transmissivité dans le spectre visible et une grande réflexivité pour la chaleur rayonnante

(30) Priorität: 20.10.1992 CH 3243/92
(43) Veröffentlichungstag der Anmeldung: 27.04.1994
(73) Patentinhaber: Glas Trösch AG, CH-4922 Bützberg (CH)
(72) Erfinder: Rögels, Stephan, D-79395 Neuenburg (DE)
(74) Vertreter: Keller, René, Dr.

(56) Entgegenhaltungen:
- EP-A- 0 233 003
- EP-A- 0 275 474
- FR-A- 2 641 272
- US-A- 4 883 721

## Beschreibung

Die Erfindung betrifft ein Verfahren zur Herstellung von Fensterscheiben gemäß dem Oberbegriff des Patentanspruchs 1 und eine Fensterscheibe gemäß dem Oberbegriff des Patentanspruchs 8.

Aus der DE-A 33 07 661 ist ein gattungsgemäßes Verfahren bekannt, bei dem eine Scheibe mit einem Kathodenzerstäubungsverfahren mit einer metallischen Doppelschicht, bestehend aus einer 5 bis 15 nm dicken Silberschicht, über der eine Aluminium-, Titan-, Tantal-, Chrom-, Mangan- oder Zirkoniumschicht bzw. einer Schicht mit einer Legierung dieser Metalle mit einer Dicke von 1 bis 5 nm, aufgebracht ist. Die metallische Doppelschicht ist durch eine einzige 30 bis 50 nm dicke Schicht aus Indiumoxid, Zinnoxid bzw. deren Mischoxide mit Gehalten an Bleioxid von der Oberfläche des Scheibensubstrates getrennt. Eine Schicht gleicher Zusammensetzung und Dicke bedeckt die metallische Doppelschicht. Der Silberschicht können auch noch 0,001 bis 1,0% Nickel zum Erhalt deren Gleichförmigkeit zugesetzt werden.

Aus der EP-A 0 464 789 ist eine nicht gattungsgemäße Fensterscheibe mit hoher Strahlungstransmission im sichtbaren Spektralbereich und hoher Strahlungsreflexion im Wärmestrahlungsbereich beschrieben. Die bekannte Fensterscheibe kann folgende Schichtenfolgen aufweisen: ZnO/Ag/ZnO/Glas; ZnO/SnO₂/ZnO/SnO₂/ZnO/Ag/ZnO/Glas; ZnO/Sn0₂/ZnO/Sn0₂/ZnO/Ag/ZnO/-Sn0₂/ZnO/Glas sowie ZnO/Sn0₂/ZnO/Sn0₂/ZnO/-Ag/ZnO/Sn0₂/ZnO/Sn0₂/ZnO/Glas. Die Zinkoxidschicht (ZnO) ist hexagonal ausgebildet. Der Zinnoxidschicht kann bis zu 10% Al, Si, B, Ti, Sn, Mg und Cr zum Abbau interner Schichtspannungen beigemischt sein. Als oberste Oxidschicht kann eine Sn0₂-, Ti0₂- oder eine ZnO-Schicht verwendet werden. Zur Vermeidung einer Oxidation der Metallschicht wird das oxidbildende Metall zuerst als Metall aufgedampft und erst nach Abscheidung einer weiteren Metallbeschichtung eine oxidierende (reaktive) Atmosphäre Zugegeben, so daß die Metallschicht allmählich in eine oxidische Schicht übergeht. Die nicht gattungsgemäße Schicht hat nur eine einzige Metallschicht und eine an die Metallschicht sich anschließende Schicht, welche kontinuierlich von einer Metallschicht in eine Oxidschicht übergeht.

Aufgabe der Erfindung ist es, eine Fensterscheibe mit hoher Strahlungstransmission im sichtbaren Spektralbereich und hoher Strahlungsreflexion im Wärmestrahlungsbereich zu schaffen, deren mechanische Resistenz gegenüber Umweltbedingungen und Verkratzen besser ist als bei den bekannten Fensterscheiben. Durch die Erfindung wird die weitere Aufgabe gelöst, eine chemische Veränderung der metallischen Doppelschicht infolge von Umwelteinflüssen auch während eines lange Zeitraums zu verhindern. Die Lösung der Aufgabe erfolgt durch das in Patentanspruch 1 beschriebene Verfahren sowie mittels der in Patentanspruch 5 beschriebenen Fensterscheibe.

Im folgenden werden Beispiele des erfindungsgemäßen Verfahrens und der erfindungsgemäßen Fensterscheibe anhand der Zeichnungen näher erläutert. Es zeigen:
Fig. 1 einen Längsschnitt durch eine erfindungsgemäße Fensterscheibe, und
Fig. 2 eine normierte Transmissionskurve T sichtbarer Strahlung durch die Fensterscheibe in Abhängigkeit der Wellenlänge Lambda in Nanometern.

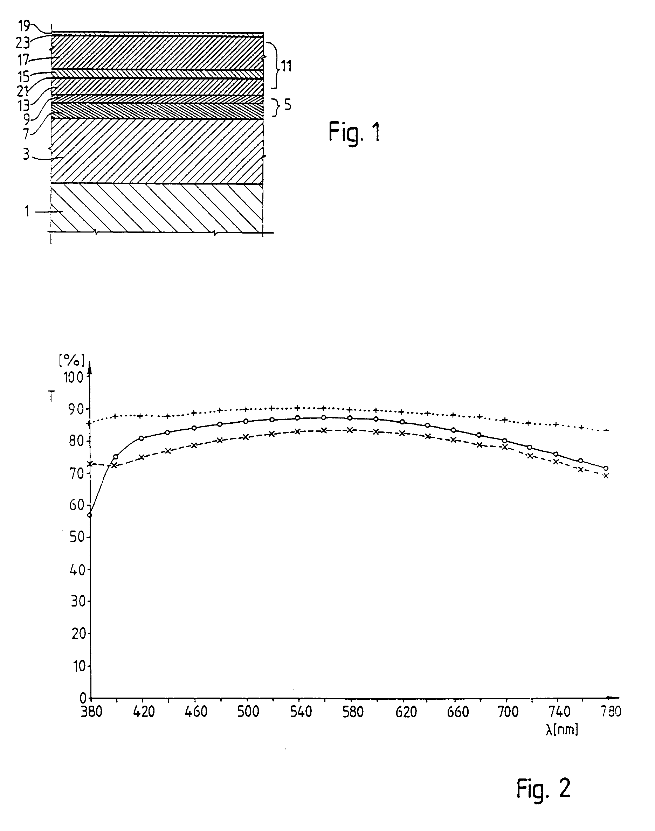

Die in Figur 1 dargestellte Fensterscheibe hat unmittelbar auf der Oberfläche ihres Substrats 1 eine Haftschicht 3 aus Zinkoxid, über der eine metallische Doppelschicht 5 mit einer über der Zinkoxidschicht 3 liegenden Silberschicht 7 und einer Titanschicht 9 angeordnet sind. Über der metallischen Doppelschicht 5 liegt eine nichtmetallische Dreifachschicht 11 aus Zinkoxid 13, Titanoxid 15 und Zinkoxid 17. Die nichtmetallische Dreifachschicht 11 ist mit einer Deckschicht aus Titanoxid (Ti0₂) 19 bedeckt.

Die Schichtdicke der Haftschicht 3 liegt zwischen 30 und 50 nm, bevorzugt 40 nm, die der Silberschicht 7 zwischen 5 und 15 nm, bevorzugt 10 nm. Die Titanschicht 9 ist dünn gewählt und liegt zwischen 1 und 10 nm, bevorzugt zwischen 1 und 5 nm. Die auf die Titanschicht 9 folgende Zinkoxidschicht 13 der Dreifachschicht 11 hat eine Dicke zwischen 5 und 20 nm, bevorzugt zwischen 14 und 15 nm. Die hierauf folgende Titandioxidschicht 15 hat eine Schichtdicke zwischen 1 und 10 nm, bevorzugt 4 bis 5 nm. Die Zinkoxidschicht 17 hat eine Schichtdicke zwischen 10 und 30 nm, bevorzugt bei 18 bis 22 nm und die Deckschicht 19 hat eine Schichtdicke zwischen 1 bis 5 nm, bevorzugt bei 1 bis 2 nm.

Wie unten ausgeführt, wird das Titanoxid mit sehr hoher Leistung mittels Kathodenzerstäubung aufgebracht. Infolge dieser hohen Leistung, der geringen Schichtdicke der Titandioxidschicht und der unten beschriebenen Stickstoffzugabe bildet sich während des Beschichtungsvorgangs eine im Subnanometerbereich liegende Zinktitanatschicht 21 bzw. 23 zwischen der Zinkoxidschicht 13 und der Titandioxidschicht 15 sowie zwischen der Zinkoxidschicht 17 und der Deckschicht 19. Es wird angenommen, daß durch diese Zinktitanatschicht 21 bzw. 23 die Schutzwirkung der Titanschicht 9 für die Silberschicht 7 gegenüber Umgebungseinflüssen, welche u. a. deren chemische Umwandlung (Korrosion, Silberchloridbildung, etc.) bewirken, verstärkt wird.

In Figur 2 sind die Strahlungstransmissionswerte im sichtbaren Bereich für die erfindungsgemäße Fensterscheibe (durchgezogene Linie), für die bekannten Fensterscheiben (gestrichelte Linie) und für unbeschichtetes Glas (punktierte Linie) über der Wellenlange in Nanometern dargestellt. Der Wert von 100% entspricht einer totalen Transmission bei der betreffenden Wellenlänge. Die Dikke des Substrates beträgt in allen Fällen 4 mm.

Die Wärmeleitfähigkeit eines Zweischeibenisolierglases hergestellt unter der Verwendung der erfindungsgemäßen Fensterscheibe und eines unbeschichteten Floatglases als Gegenscheibe liegt bei einem Zwischenraum von 15 mm zwischen den beiden Scheiben bei 1,5 W/m². K, bei den bekannten Scheiben bei 1,6 W/m^{2.} K und bei unbeschichteten Scheiben bei 3,0 W/m². K.

Sämtliche Schichten sind mit Kathodenzerstäubungsverfahren aufgebracht. Vor dem Beschichten wird die Oberfläche der Scheibensubstrate einem Reinigungsverfahren unterzogen. Die metallische Doppelschicht wird in einer Neutralgasatmosphäre, bevorzugt aus Argon aufgebracht. Als zu zerstäubende Kathode wird Silber und Titan verwendet. Die Erzeugung der Oxidschichten erfolgt durch Zerstauben von Titan und Zink in einer oxidierenden (reaktiven) Atmosphäre mit einem hohen Sauerstoffgehalt, dem geringe Mengen von Stickstoff beigemischt sind, um eine Zinktitanatbildung zu ermöglichen. Als bevorzugtes Mischungsverhältnis des reaktiven Gases werden 35% Sauerstoff, 50% Argon und 15% Stickstoff für die nichtmetallischen Schichten über der metallischen Doppelschicht verwendet. Für die Haftschicht 3 unterhalb der metallischen Doppelschicht wird der Sauerstoffgehalt des reaktiven Gases derart gewählt, daß sich eine stöchiometrische Bedingung für das abzuscheidende Schichtmaterial ergibt.

Die Beschichtung erfolgt in einem kontinuierlichen Verfahren, wobei die zu beschichtenden Scheiben für den Beschichtungsvorgang mehrere Beschichtungszonen durchlaufen. Nach dem Reinigungsvorgang gelangen die Scheibensubstrate in eine erste Zone zum Aufbringen der Haftschicht 3 - (Grundschicht) mit drei Zinkkathoden, wobei die Zerstäubungsleistung pro Kathode 35 kW beträgt. In einer zweiten Zone sind eine Silberkathode und eine Titankathode zur Erzeugung der metallischen Doppelschicht 5 angeordnet, wobei für beide Kathoden eine Zerstäubungsleistung von 9 kW verwendet wird. In einer dritten Zone wird die erste Schicht 13 (Zinkoxid) der Dreifachschicht 11 unter Verwendung einer Zinkkathode mit 30 kW erzeugt. Die Herstellung der Titandioxidschicht 15 erfolgt in einer vierten Zone mit zwei Titankathoden, wobei die Zerstäubungsleistung jeweils 32 kW pro Kathode beträgt. Die Zinkoxidschicht 17 wird in der fünften Zone mit zwei Zinkkathoden mit einer Zerstäubungsleistung von je 27 kW pro Kathode erzeugt. Die Deckschicht 19 wird in der sechsten Zone durch Zerstäuben einer Titankathode mit 50 kW erzeugt. Die Substrate werden mit einer Geschwindigkeit von 304 cm pro Minute bewegt. Alle Kathoden haben eine Länge von 350 cm.

Die beschichtete Fensterscheibe wird als Zweischeibenisolierglas verwendet. Anstelle von Glasscheiben können auch transparente Kunststoffolien bzw. Kunststoffplatten beschichtet werden.

Die erfindungsgemäßen Fensterscheiben wurden einem Salzsprühtest nach SS DIN 50 021 vierundzwanzig Stunden lang ausgesetzt, den sie unbeschadet überstanden. Die bekannten Schichten wiesen nach diesem Test starke Beschädigungen in Form von Korrosion der Silberschicht auf, ferner lösten sich die Schichten über der Silberschicht teilweise ab.

Die erfindungsgemäßen Fensterscheiben wurden ferner einem Klimawechseltest nach DIN 52 344 vierundzwanzig Stunden lang unterworfen. Hierbei ergaben sich signifikant weniger Korrosionsflecken und ausgedehnte Gebiete von Korrosion (matte Stellen) als bei den bekannten Fensterscheiben.

Die Widerstandsfähigkeit der erfindungsgemäßen Fensterscheiben wurde mit einem Waschtest nach ASTMD 24 86 getestet. Selbst nach 1000 Hüben konnten noch keine Defekte festgestellt werden, wohingegen die bekannten Scheiben schon nach 300 Hüben Kratzer und Schichtablösungen aufwiesen.

Die Widerstandsfähigkeit der erfindungsgemäßen Fensterscheiben gegen saures Wasser in Waschmaschinen wird insbesondere durch die Deckschicht 19 erreicht.

Ebenfalls im optischen Bereich zeigen die erfindungsgemäßen Fensterscheiben hervorragende Eigenschaften, indem nur ein sehr schwach feststellbarer Farbstich vorhanden ist.

Anstelle der zweiten Metallschicht aus Titan kann eine Schicht aus Nickel-Chrom, Aluminium, Tantal, Chrom, Mangan oder Legierungen dieser Metalle verwendet werden. Anstelle von Zinkoxid kann auch Indium- sowie Zinnoxid verwendet werden. Es hat sich jedoch gezeigt, daß bei der Verwendung der oben beschriebenen Ti0₂/Zn0/Ti0₂/Zn0/Ti/Ag/Zn0/Glas-Schichtenfolge, welche Zinktitanatzwischenschichten aufweist, optimale Resistenz gegenüber mechanischer und chemischer Beanspruchung sowie gegen Umwelteinflüsse erreicht wird.

Bei geringer Aggressivität durch Umgebungseinflüsse, kann auf die Deckschicht 19 verzichtet werden.

Anstelle die Schichten mittels Kathodenzerstäubung aufzubringen, können auch andere PVD-Verfahren verwendet werden. Es hat sich jedoch gezeigt, daß die nach dem oben beschriebenen Verfahren aufgebrachten Schichten eine sehr gute chemische und mechanische Resistenz aufweisen.

Die ausgezeichneten Resistenzeigenschaften der erfindungsgemäßen Fensterscheiben beruht höchstwahrscheinlich auf der Abdeckung der Silberschicht mit einer Titanschicht und dem wechselweisen Aufbau der die metallische Doppelschicht bedeckenden ZnO/Ti0₂-Schicht, wobei die Resistenz gegenüber Umwelteinflüssen signifikant durch Zinktitanatschichten verbessert werden dürfte.

Als besonders vorteilhaft ist neben der hohen mechanischen Resistenz und der Resistenz gegenüber Umgebungseinflüssen die Verwendung von preisgünstigen Materialien zur Erzeugung der Schichten zu erwähnen.

## Patentansprüche

1. Verfahren zur Herstellung von Fensterscheiben mit hoher Strahlungstransmission im sichtbaren Spektralbereich und hoher Strahlungsreflexion im Wärmestrahlungsbereich durch Aufbringen einer metallischen Doppelschicht (5) und mehrerer nichtmetallischer Schichten mittels eines PVD-Verfahrens auf dem Fensterscheibensubstrat (1), dadurch gekennzeichnet, daß über der Doppelschicht (5) eine nichtmetallische Dreifachschicht (11) mit bevorzugt zwei Schichten (13, 17) gleicher chemischer Zusammensetzung aufgebracht wird, wobei die auf der Metallschicht (9) der Doppelschicht (11) liegende Nichtmetallschicht (13) der Dreifachschicht (11) das Metall dieser Metallschicht (9) nicht als wesentlichen Bestandteil ihrer chemischen Verbindung enthält.

2. Verfahren nach Anspruch 1, dadurch gekennzeichnet, daß die nichtmetallische Dreifachschicht (11) bevorzugt mittels einem reaktiven Kathodenzerstäubungsverfahren aufgebracht wird, bei dem bevorzugt abwechselnd Zink (Zn) und Titan (Ti) in einer reaktiven Sauerstoffatmosphäre zerstäubt werden.

3. Verfahren nach Anspruch 2, dadurch gekennzeichnet, daß der reaktiven Sauerstoffatmosphäre Stickstoff zugesetzt wird, um zwischen der Zink- (13, 17) und Titanoxidschicht (15, 19) eine mit Blick auf die Titanoxidschichtdicke dünne Zinktitanatschicht (21, 23) zu erzeugen, wobei die Zusammensetzung der Atmosphäre bevorzugt zu 35% Sauerstoff, 50% Argon und 15% Stickstoff gewählt wird.

4. Verfahren nach Anspruch 2 oder 3, dadurch gekennzeichnet, daß unmittelbar über der obersten Metallschicht (9) eine Zinkoxidschicht (13) aufgebracht wird.

5. Verfahren nach einem der Ansprüche 1 bis 4, dadurch gekennzeichnet, daß über der Dreifachschicht (11) eine nichtmetallische Deckschicht (19) aufgebracht wird, welche bevorzugt aus einem Material der Dreifachschicht (11), insbesondere Titanoxid besteht.

6. Verfahren nach Anspruch 2 oder 5, dadurch gekennzeichnet, daß die auf der metallischen Doppelschicht (5) liegenden nichtmetallischen Schichten (13, 15, 17, 19) in einem sauerstoffhaltigen reaktiven Gas aufgebracht werden, dessen Sauerstoffgehalt höher gewählt wird als für eine stöchiometrische Bedingung für das Schichtmaterial erforderlich ist.

7. Verfahren nach einem der Ansprüche 1 bis 6, dadurch gekennzeichnet, daß unmittelbar auf die zu beschichtende Substratfläche (1) der Fensterscheibe eine Haftschicht (3), bevorzugt aus Zinkoxid in einer Sauerstoffatmosphäre aufgebracht wird, welche eine stöchiometrische Bildung von Zinkoxid ermöglicht.

8. Fensterscheibe mit hoher Strahlungstransmission im sichtbaren Spektralbereich und hoher Strahlungsreflexion im Wärmestrahlungsbereich hergestellt nach dem Verfahren nach einem der Ansprüche 1 bis 7 mit einer metallischen Doppelschicht (5) und mehreren nichtmetallischen Schichten über dem Fensterscheibensubstrat (1), gekennzeichnet durch eine über der Doppelschicht (5) liegende nichtmetallische Dreifachschicht (11), wobei bevorzugt zwei Schichten (13, 17) im wesentlichen aus gleichen Nichtmetallen bestehen und die auf der obersten Metallschicht (9) der Doppelschicht (5) liegende Nichtmetallschicht (13) der Dreifachschicht (11) deren Metall im wesentlichen als chemisches Verbindungselement nicht enthält.

9. Fensterscheibe nach Anspruch 8, gekennzeichnet durch eine zwischen der Oberfläche des Substrats (1) und der metallischen Doppelschicht (5) liegende Haftschicht (3), deren chemische Zusammensetzung bevorzugt im wesentlichen der chemischen Zusammensetzung der auf der obersten Metallschicht (9) liegenden Nichtmetallschicht (13) entspricht und bevorzugt eine 30 bis 50 nm dicke Zinkoxidschicht ist.

10. Fensterscheibe nach Anspruch 8 oder 9, dadurch gekennzeichnet, daß die Dreifachschicht (11) aus einer 5 bis 20 nm dicken Zinkoxidschicht (13) über der obersten Metallschicht (9) der Doppelschicht (5), überlagert von einer 1 bis 10 nm dicken Titanoxidschicht (15), über der eine 10 bis 30 nm dicke Zinkoxidschicht (17) liegt, besteht.

11. Fensterscheibe nach einem der Ansprüche 8 bis 10, gekennzeichnet durch wenigstens eine Mischschicht (21, 23), insbesondere eine Zinktitanatschicht, in der nichtmetallischen Dreifachschicht (11).

12. Fensterscheibe nach einem der Ansprüche 8 bis 11, gekennzeichnet durch eine über der Dreifachschicht (11) liegende nichtmetallische Deckschicht (19), bevorzugt im wesentlichen aus einem Material der Dreifachschicht (11), insbesondere im wesentlichen aus Titanoxid mit einer bevorzugten Schichtdicke von 1 bis 5 nm.

## Claims

1. Process for producing window-panes with high transmission of radiation in the visible spectral range and high reflection of radiation in the thermal radiation range by applying a metallic double layer (5) and a plurality of non-metallic layers to the window-pane substrate (1) by means of a PVD process, characterised in that a non-metallic triple layer (11), preferably with two layers (13, 17) of the same chemical composition, is applied over the double layer (5), wherein the non-metal layer (13), which lies on the metal layer (9) of the double layer (11), of the triple layer (11) does not comprise the metal of this metal layer (9) as an essential constituent of its chemical compound.

2. Process according to claim 1, characterised in that the non-metallic triple layer (11) is preferably applied by means of a reactive cathode sputtering process, in which zinc (Zn) and titanium (Ti) are preferably sputtered alternately in a reactive oxygen atmosphere.

3. Process according to claim 2, characterised in that nitrogen is added to the reactive oxygen atmosphere in order to produce between the zinc oxide layer (13, 17) and the titanium oxide layer (15, 19) a zinc titanate layer (21, 23) which is thin with respect to the titanium oxide layer thickness, the composition of the atmosphere preferably being 35% oxygen, 50% argon and 15% nitrogen.

4. Process according to claim 2 or 3, characterised in that a zinc oxide layer (13) is applied directly over the top metal layer (9).

5. Process according to one of claims 1 to 4, characterised in that a non-metallic finishing layer (19) is applied over the triple layer (11), which layer (19) preferably consists of a material of the triple layer (11), in particular titanium oxide.

6. Process according to claim 2 or 5, characterised in that the non-metallic layers (13, 15, 17, 19) lying on the metallic double layer (5) are applied in a reactive gas which contains oxygen and the oxygen content of which is higher than is required for a stoichiometric condition for the layer material.

7. Process according to one of claims 1 to 6, characterised in that an adhesive layer (3), preferably of zinc oxide, is applied directly to the substrate surface (1), which is to be coated, of the window-pane in an oxygen atmosphere which enables a stoichiometric formation of zinc oxide to take place.

8. Window-pane with high transmission of radiation in the visible spectral range and high reflection of radiation in the thermal radiation range produced according to the process as in one of claims 1 to 7, with a metallic double layer (5) and a plurality of non-metallic layers over the window-pane substrate (1), characterised by a non-metallic triple layer (11) lying over the double layer (5), wherein two layers (13, 17) preferably consist essentially of the same non-metals and the non-metal layer (13), which lies on the top metal layer (9) of the double layer (5), of the triple layer (11) does not essentially comprise the metal thereof as a chemical compound element.

9. Window-pane according to claim 8, characterised by an adhesive layer (3) which lies between the surface of the substrate (1) and the metallic double layer (5), the chemical composition of which preferably corresponds essentially to the chemical composition of the non-metal layer (13) lying on the top metal layer (9) and which is preferably a 30 to 50 nm thick zinc oxide layer.

10. Window-pane according to claim 8 or 9, characterised in that the triple layer (11) consists of a 5 to 20 nm thick zinc oxide layer (13) over the top metal layer (9) of the double layer (5), superimposed by a 1 to 10 nm thick titanium oxide layer (15), over which a 10 to 30 nm thick zinc oxide layer (17) lies.

11. Window-pane according to one of claims 8 to 10, characterised by at least one mixed layer (21, 23), in particular a zinc titanate layer, in the non-metallic triple layer (11).

12. Window-pane according to one of claims 8 to 11, characterised by a non-metallic finishing layer (19) which lies over the triple layer (11) and preferably consists essentially of a material of the triple layer (11), in particular essentially of titanium oxide with a preferred layer thickness of 1 to 5 nm.

## Revendications

1. Procédé pour la préparation de panneaux de fenêtre présentant une transmissivité élevée dans le spectre visible et une grande réflexivité dans le domaine de la chaleur rayonnante par application d'une double couche métallique (5) et de plusieurs couches non métalliques au moyen d'un procédé PVD sur le substrat de panneau de fenêtre (1), caractérisé en ce que l'on applique sur la double couche (5) une triple couche non métallique (11) avec de préférence deux couches (13, 17) de même composition chimique, moyennant quoi la couche non métallique (13) appliquée sur la couche métallique (9) de la double couche (5), de la triple couche (11), contenant le métal de cette couche métallique (9) n'étant pas le constituant essentiel de sa composition chimique.

2. Procédé selon la revendication 1, caractérisé en ce que la triple couche non métallique (11) est de préférence appliquée au moyen d'un procédé de pulvérisation cathodique réactif, dans lequel on pulvérise de préférence de façon alternée du zinc (Zn), du titane (Ti) dans une atmosphère d'oxygène réactive.

3. Procédé selon la revendication 2, caractérisé en ce que l'azote ajouté à l'atmosphère d'oxygène réactive pour produire entre la couche de zinc (13, 17) et la couche d'oxyde de titane (15, 19) une mince couche de titanate de zinc (21, 23) par rapport à l'épaisseur de la couche d'oxyde de titane, la composition de l'atmosphère étant de préférence sélectionnée avec 35 % d'oxygène, 50 % d'argon et 15 % d'azote.

4. Procédé selon la revendication 2 ou 3, caractérisé en ce qu'une couche d'oxyde de zinc (13) est appliquée directement sur la couche métallique supérieure (9).

5. Procédé selon l'une des revendications 1 à 4, caractérisé en ce que sur la triple couche (11) est appliquée une couche supérieure non métallique (19), qui de préférence est constituée par un matériau de la triple couche (11) en particulier de l'oxyde de titane.

6. Procédé selon la revendication 2 ou 5, caractérisé en ce que les couches (13, 15, 17, 19) non métalliques reposant sur la double couche métallique (5) sont appliquées dans un gaz réactif contenant de l'azote, dont la teneur en oxygène est sélectionnée de façon à être supérieure à ce qui est nécessaire à une condition stoechiométrique pour le matériau de couche.

7. Procédé selon l'une des revendications 1 à 6, caractérisé en ce que directement sur la surface de substrat (1) à revêtir du panneau de fenêtre, est appliquée une couche adhésive (3), de préférence en oxyde de zinc dans une atmosphère d'oxygène qui permet une formation stoechiométrique d'oxyde de zinc.

8. Panneau de fenêtre à transmissivité élevée dans le spectre visible et à grande réflexivité dans le domaine de la chaleur radiante réalisé selon le procédé de l'une des revendications 1 à 7 avec une double couche métallique (5) et plusieurs couches non métalliques sur le substrat de panneau de fenêtre (1), caractérisé par une triple couche non métallique (11) située sur la double couche (5), moyennant quoi de préférence deux couches (13, 17) essentiellement constituées par les mêmes éléments non métalliques et la couche non métallique (13) reposant sur la couche métallique supérieure (9) de la double couche (5), de la triple couche (11), qui ne contient sensiblement pas de métal en tant que composant chimique.

9. Panneau de fenêtre selon la revendication 8, caractérisé en ce qu'une couche adhésive (3) située entre la surface du substrat et la double couche métallique (5), dont la composition chimique correspond de préférence sensiblement à la composition chimique de la couche non métallique (13) située sur la couche métallique supérieure (9) est de préférence une couche d'oxyde de zinc d'une épaisseur de 30 à 50 mm.

10. Panneau de fenêtre selon la revendication 8 ou 9, caractérisé en ce que la triple couche (11) est constituée par une couche d'oxyde de zinc (13) d'une épaisseur de 5 à 20 nm sur la couche métallique supérieure (9) de la double couche (5), recouverte d'une couche d'oxyde de titane (15) d'une épaisseur de 1 à 10 nm, sur laquelle repose une couche d'oxyde de zinc (17) de 10 à 30 nm.

11. Panneau de fenêtre selon l'une des revendications 8 à 10, caractérisé en ce qu'au moins une couche mixte (21, 23), notamment une couche de titanate de zinc, est placée dans la triple couche non métallique (11).

12. Panneau de fenêtre selon l'une des revendications 8 à 11, caractérisé en ce qu'une couche supérieure non métallique (19) reposant sur la triple couche (11), de préférence sensiblement en un matériau de la triple couche (11), en particulier essentiellement en oxyde de titane avec une épaisseur de couche préférée de 1 à 5 nm.
